# EUROPÄISCHE PATENTSCHRIFT

(11) **EP 0 691 384 B1**
(45) Veröffentlichungstag und Bekanntmachung des Hinweises auf die Patenterteilung: **08.04.1998**
(21) Anmeldenummer: 95109962.1
(22) Anmeldetag: 27.06.1995
(51) Int. Cl.: C08F 265/04, C09D 7/14

(54) **Farbstoffe enthaltende wässrige Dispersionen**
Dye containing aqueous dispersions
Dispersions aqueuses contenant des colorants

(30) Priorität: 06.07.1994 DE 4423610
(43) Veröffentlichungstag der Anmeldung: 10.01.1996
(73) Patentinhaber: BASF AKTIENGESELLSCHAFT, 67056 Ludwigshafen (DE)
(72) Erfinder: Schlarb, Bernhard, Dr., D-67067 Ludwigshafen (DE); Wendel, Kurt, Dr., D-67063 Ludwigshafen (DE); Bellaire, Helmut, D-67069 Ludwigshafen (DE); Beck, Karin Heidrun, Dr., D-67067 Ludwigshafen (DE)

(56) Entgegenhaltungen:
- EP-A- 0 342 042
- EP-A- 0 401 565
- DE-A- 4 232 721
- FR-A- 2 301 578

## Beschreibung

Die Erfindung betrifft Farbstoffe enthaltende wäßrige Dispersion erhältlich durch
a) Herstellung mindestens zweier Copolymerisate A) und B) in einem organischen Lösungsmittel durch Lösungspolymerisation,
   wobei A) 5 bis 50 Gew.-%, bezogen auf A), einer ethylenisch ungesättigten Säure enthält und
   B) im wesentlichen frei von ethylenisch ungesättigten Säuren ist
      und die Lösungspolymerisation der Copolymerisate A) oder B) in Gegenwart des jeweiligen anderen, bereits hergestellten Copolymerisats A) oder B) erfolgt.
   b) Zugabe eines Farbstoffs, der in dem organischen Lösungsmittel vollständig löslich ist,
      vor, während oder nach der Lösungspolymerisation.
   c) Dispergierung der erhaltenen Lösung in Wasser und
   d) gegebenenfalls Entfernung des organischen Lösungsmittels.

Des weiteren betrifft die Erfindung ein Verfahren zur Herstellung der wäßrigen Dispersionen und die Verwendung der Dispersionen als Beschichtungsstoffe oder in bzw. als Schreibmittel.

Aus der JP-A-04/1272 sind Farbstoffe enthaltende Sekundärdispersionen bekannt, welche hergestellt werden durch Polymerisation in einem organischen Lösungsmittel, Zusatz des Farbstoffs und anschließende Dispergierung in Wasser.

In der EP-A-225 612 werden Sekundärdispersionen beschrieben, welche durch zweistufige Polymerisation in einem organischen Lösungsmittel und anschließende Dispergierung in Wasser erhalten werden.

Bisher bekannte wasserunlösliche Farbstoffe enthaltende Sekundärdispersionen weisen den Nachteil auf, daß der Farbstoff nicht in ausreichender Menge von den dispergierten Polymerteilchen aufgenommen wird.

Ein hoher Farbstoffgehalt ist jedoch erwünscht, um Beschichtungen oder Schreibflüssigkeiten mit einer hohen Deckkraft zu erhalten. Weiterhin sollen die Beschichtungen bzw. Schreibflüssigkeiten eine gute Licht- und Wasserbeständigkeit aufweisen.

Aufgabe der vorliegenden Erfindung waren daher wäßrige Dispersionen, welche hohe Mengen an Farbstoff enthalten und sich so für die voranstehend genannten Verwendungen eignen.

Demgemäß wurden die oben definierten wäßrigen Dispersionen, ein Verfahren zu ihrer Herstellung sowie ihre Verwendung als Beschichtungsmittel oder in bzw. als Schreibflüssigkeiten gefunden.

Im Verfahrensschritt a) zur Herstellung der erfindungsgemäßen wäßrigen Dispersionen werden mindestens zwei, vorzugsweise zwei Copolymerisate A) und B) in einem organischen Lösungsmittel durch radikalische Polymerisation hergestellt. Zuerst erfolgt die Herstellung des Copolymerisats A) oder B). Anschließend werden die Monomeren des verbleibenden Copolymerisats A) oder B) in Gegenwart des bereits hergestellten Copolymerisats A) oder B) polymerisiert.

Vorzugsweise wird zunächst Copolymerisat A) hergestellt.

Die Monomeren können bei der Polymerisation in den einzelnen Stufen ganz oder teilweise vorgelegt werden. Die Monomeren können auch während der Polymerisation zudosiert werden.

Die Copolymerisate A) und B) unterscheiden sich in der Zusammensetzung der Monomeren.

Copolymerisat A) enthält 5 bis 50 Gew.-%, vorzugsweise 10 bis 40 Gew.-% einer ethylenisch ungesättigten Säure, z.B. einer Carbonsäure, Dicarbonsäure oder deren Anhydride. Im Falle des Anhydrids findet eine Verseifung statt, um die gewünschte Säuremenge im Polymer zu haben. Zu nennen sind z.B. Acrylsäure, Methacrylsäure, Itaconsäure, Maleinsäure, Fumarsäure oder Maleinsäure- bzw. Fumarsäureanhydrid. Insbesondere wird der Gehalt der Säuren so gewählt, daß das Copolymerisat A) eine Säurezahl von 5 bis 300, besonders bevorzugt 20 bis 200, ganz besonders bevorzugt 30 bis 150 und im speziellen 70 bis 120 mg KOH/g Copolymerisat A) (DIN 53 402) aufweist.

Neben den ungesättigten Säuren enthält Copolymerisat A) vorzugsweise sogenannte Hauptmonomere, ausgewählt aus C₁-C₂₀-Alkyl(meth)acrylaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen oder deren Gemische.

Als Hauptmonomere zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren und Chloropren, sowie Ethylen, Propylen und Isobutylen genannt.

Die Hauptmonomeren werden auch vorzugsweise im Gemisch eingesetzt.

Vinylaromatische Verbindungen wie Styrol werden z.B. häufig im Gemisch mit C₁-C₂₀-Alkyl(meth)acrylaten, insbesondere mit C₁-C₈-Alkyl(meth)acrylaten, oder nicht aromatischen Kohlenwasserstoffen wie Isopren oder vorzugsweise Butadien eingesetzt.

Besonders bevorzugt sind Alkyl(meth)acrylate, Styrol und Gemische der Alkyl(meth)acrylate bzw. deren Gemische mit Styrol als Hauptmonomere.

Vorzugsweise besteht das radikalisch polymerisierte Polymer zu mindestens 40, besonders bevorzugt zu mindestens 60 Gew.-% aus den Hauptmonomeren.

Weitere ethylenisch ungesättigte Monomere, welche im Copolymerisat A) enthalten sein können, sind insbesondere Hydroxylgruppen enthaltende Monomere wie Hydroxyalkyl(meth)acrylate, z.B. Hydroxypropyl- oder Hydroxyethyl(meth)acrylat.

Polymere mit einem Gehalt an Hydroxylgruppen können z.B. mit Melaminharzen oder Polyisocyanaten, insbesondere wasseremulgierbaren Polyisocyanaten vernetzt werden. Der Gehalt der Hydroxylgruppen enthaltenden Monomere wird vorzugsweise so gewählt, daß die OH-Zahl des Polymeren 0 bis 200, besonders bevorzugt 0 bis 150, ganz besonders bevorzugt 0 bis 100 und insbesondere 0 bis 30 mg KOH/g Polymer (DIN 53 240) beträgt. Des weiteren kann das Polymer z.B. auch einen Gehalt an Monomeren mit Carbonylgruppen aufweisen und so z.B. mit Polyhydraziden vernetzbar sein.

Das gewichtsmittlere Molekulargewicht (M_{w}) des Copolymerisats A) beträgt vorzugsweise 20.000 bis 500.000, besonders bevorzugt 50.000 bis 200.000 und ganz besonders bevorzugt 70.000 bis 120.000 (bestimmt durch Gelpermeationschromatographie, mit Polystyrol als Standard).

Copolymerisat B) ist im wesentlichen frei von Säuregruppen und besteht vorzugsweise im wesentlichen aus den oben genannten Hauptmonomeren und weiteren Monomeren mit Ausnahme von ethylenisch ungesättigten Säuren, z.B. Carbonsäuren, Dicarbonsäuren oder Anhydriden, welche zu Säuren verseift werden.

Für den Aufbau von Copolymerisat B) gilt ansonsten das über den Aufbau von Copolymerisat A) gesagte.

Der Anteil des Copolymerisats A) beträgt vorzugsweise 95 bis 20, besonders bevorzugt 80 bis 25 und ganz besonders bevorzugt 50 bis 30 Gew.-%, derjenige von B) vorzugsweise 80 bis 5, besonders bevorzugt 75 bis 20 und ganz besonders bevorzugt 70 bis 50 Gew.-%, bezogen jeweils auf die Summe von A) + B).

Als organische Lösungsmittel im Verfahrensschritt a) eignen sich insbesondere solche mit einem Siedepunkt unter 100°C bei 1 bar, bzw. solche, die mit Wasser ein Azeotrop mit einem Siedepunkt unter 100°C bei 1 bar bilden, so daß das Lösungsmittel bei Bedarf in Verfahrensschritt d) leicht wieder entfernt werden kann.

Als Lösungsmittel genannt seien z.B. Butanol, Isobutanol, Propanol, Ethanol und Methanol.

Die Polymerisation der ethylenisch ungesättigten Monomeren kann in bekannter Weise rein thermisch oder vorzugsweise in Gegenwart von Initiatoren erfolgen. Als radikalbildende Initiatoren genannt seien z.B. Azobiscarbonsäureamide., Azobiscarbonsäurenitrile, Persäureester oder Peroxide. Die Menge des Initiators beträgt vorzugsweise 0,2 bis 5, besonders bevorzugt 0,5 bis 3 Gew.-%, bezogen auf die Monomeren. Die Polymerisationstemperatur beträgt vorzugszweise 50 bis 150°C, besonders bevorzugt 80 bis 130°C. Gegebenenfalls können auch Regler, z.B. Mercaptoethanol, Tertiärdodecylmercaptan oder Diisopropylxanthogensulfid, vorzugsweise in Mengen von 0 bis 3 Gew.-%, bezogen auf die Monomeren, zugesetzt werden.

Nach Herstellung der Copolymerisate A) und B) wird eine Dispersion oder vorzugsweise Lösung der Copolymerisate in dem organischen Lösungsmittel erhalten. Der Feststoffgehalt beträgt vorzugsweise 50 bis 95, insbesondere 60 bis 85 Gew.-%.

Im Verfahrensschritt b) wird ein Farbstoff zugesetzt. Der Farbstoff kann dem organischen Lösungsmittel vor oder während der Herstellung der Copolymerisate zugesetzt werden. Vorzugsweise wird der Farbstoff nach der Herstellung der Copolymerisate der erhaltenen organischen Lösung zugesetzt. In jedem Fall wird der Farbstoff vor der Dispergierung in Wasser zugesetzt. Es handelt sich um einen in dem organischen Lösungsmittel vollständig löslichen Farbstoff. In Wasser ist der Farbstoff vorzugsweise weitgehend unlöslich und insbesondere zu weniger als 0,1 g/l Wasser bei 20°C löslich. Zur besseren Lösung des Farbstoffs in dem organischen Lösungsmittel kann z.B. die Temperatur auf 50 bis 120°C, vorzugsweise 70 bis 105°C erhöht werden.

Geeignete Farbstoffe, insbesondere auch für Schreibflüssigkeiten sind z.B. Metallkomplexfarbstoffe, z.B. 1:1 oder 1:2 Chrom-, Kobalt-, Nickel- oder Eisenkomplex von Azofarbstoffen, die beispielsweise über zur Azogruppe orthoständige Hydroxygruppen und/ oder Carboxygruppen verfügen, Mono- oder Disazofarbstoffe, die frei sind von ionischen Gruppen, Anthrachinonfarbstoffe, Cumarinfarbstoffe, Methin- oder Azamethinfarbstoffe.

Die Menge des Farbstoffs beträgt vorzugsweise 5 bis 200, insbesondere 10 bis 150 und besonders bevorzugt 50 bis 100 Gew.-%, bezogen auf die Copolymerisate A) und B).

Vor der Dispergierung in Wasser (Verfahrensschritt c)) und vorzugsweise nach der Zugabe des Farbstoffs werden Säuregruppen der Copolymerisate A) und B) ganz oder teilweise mit einer geeigneten Base, z.B. Ammoniak oder organischen Aminen, z.B. Triethylamin, neutralisiert.

Zur Dispergierung in Wasser braucht im allgemeinen kein Emulgator oder Schutzkolloid zugesetzt werden. Die erhaltenen Dispersionen sind auch ohne derartige grenzflächenaktive Hilfsmittel stabil.

Der pH-Wert der nach der Dispergierung erhaltenen wäßrigen Dispersion beträgt vorzugsweise 6 bis 10, insbesondere 7 bis 9. Der Feststoffgehalt der wäßrigen Dispersion beträgt vorzugsweise 30 bis 70, insbesondere 40 bis 60 Gew.-%, bezogen auf die Dispersion. Das organische Lösungsmittel kann, z.B. durch Destillation, gegebenenfalls unter vermindertem Druck im gewünschten Ausmaß entfernt werden.

Bevorzugt sind Restgehalte an organischem Lösungsmittel in der Dispersion unter 5, besonders bevorzugt unter 1 Gew.-%.

Die Dispersionen eignen sich als Beschichtungsmittel für unterschiedlichste Substrate, z.B. aus Glas, Kunststoff, Metall, Holz und Papier.

Die Farbstoffe enthaltenden Dispersionen zeigen als Beschichtungen eine hohe Deckkraft und eignen sich z.B. auch als oder in Schreibflüssigkeiten.

### Beispiele

### Herstellung der erfindungsgemäßen Dispersionen

a) Lösungspolymerisate I - IV
In einem 4-Liter Glasreaktor mit Ankerrührer, Rückflußkühler und Ölheizung wurde die Vorlage vorgelegt und Luft gegen Stickstoff ausgetauscht.
Die Vorlage wurde auf 105°C aufgeheizt. Dann wurden 10 g von Zulauf 3 zugegeben und danach wurde der Rest von Zulauf 1 und 45 g von Zulauf 3 innerhalb von 2 Std. zudosiert und dann noch 1 Std. weitergerührt. Dann wurde Zulauf 2 und 100 g von Zulauf 3 in 2,5 Std. zudosiert. Anschließend wurde der Rest von Zulauf 3 in 1 Std. zudosiert und dann noch 1 Std. weitergerührt. (Zusammensetzung der Lösungspolymerisate siehe Tabelle 1.)

**Tabelle 1**

| | I | II | III | IV |
|---|---|---|---|---|
| Vorlage: | | | | |
| Isobutanol | 200 | 200 | 200 | 200 |
| Zulauf 1 | 60 | 60 | 60 | 60 |
| Zulauf 1: | | | | |
| Methacrylsäure | 120 | 120 | 60 | 90 |
| MMA | 160 | 160 | 200 | 180 |
| n-BA | 90 | 90 | 110 | 100 |
| Styrol | - | - | - | - |
| HEMA | 30 | 30 | 30 | 30 |
| Zulauf 2: | | | | |
| MMA | 320 | 320 | 320 | 320 |
| n-BA | 250 | 260 | 260 | 260 |
| Styrol | - | - | - | - |
| HEMA | 20 | 20 | 20 | 20 |
| MTMO | 10 | - | - | - |
| Zulauf 3: | | | | |
| t-BPO | 50 | 50 | 50 | 50 |
| Isobutanol | 185 | 185 | 185 | 185 |
| Isobutanol | | 67 | | |
| FG (%) | 71,7 | 68,0 | 71,3 | 72,0 |
| K | 26 | 30 | 26 | 26 |
| SZ | 78 | | 37 | 56 |
| (Angaben in g) Abkürzungen: MMA: Methylmethacrylat t-BPO: tertiär Butylperoctoat n-BA:n-Butylacrylat HEMA: Hydroxyethylmethacrylat MTMO: 3-Mercaptopropyltrimethoxysilan FG: Feststoffgehalt K: K-Wert nach Fikentscher SZ: Säurezahl | | | | |

b) Herstellung der Dispersionen 1 - 6
Die in a) erhaltene Polymerlösung wurde auf 60°C erwärmt. Dann wurde unter Rühren der Farbstoff und das Isobutanol zugegeben und bei 60°C 30 min lang weitergerührt. Dann wurde die Base (DMEA bzw. wäßrige, 25 gew.-%ige Ammoniaklösung) innerhalb von 15 min unter Rühren zudosiert. Anschließend wurden 250 g Wasser unter Rühren zudosiert. Es wurde im Vakuum ein Isobutanol-Wasser-Gemisch abdestilliert, wobei gleichzeitig frisches Wasesr zudosiert wurde, so daß die Viskosität der Dispersion auf gleichem Niveau blieb (s. Tabelle 2).

**Tabelle 2**

| Dispersion | 1 | 2 | 3 | 4 | 5 | 6 |
|---|---|---|---|---|---|---|
| Vorlage: | | | | | | |
| Polymer | I | I | I | II | III | IV |
| (g) | 200 | 200 | 200 | 210 | 210 | 205 |
| Polymer fest (g) | 143 | 143 | 143 | 143 | 150 | 150 |
| Neopen®X 58¹⁾ (g) | 100 | 100 | 150 | 150 | 150 | 150 |
| Verhältnis Polymer:FS⁴⁾ | 1,43 | 1,43 | 0,95 | 0,95 | 1 | 1 |
| Isobutanol (g) | 100 | 100 | 150 | 150 | 150 | 150 |
| DMEA²⁾ | 6 | | | | | |
| wäßr. NH₃ | - | 13,6 | 8,2 | 13,6 | 8 | 8 |
| FG (%) | 44,0 | 38,4 | 38,0 | 37,5 | 47,7 | 37,5 |
| pH | 7,2 | 7,3 | 6,6 | 7,5 | 7,8 | 7,3 |
| i-BuOH (%)³⁾ | 1,2 | 7,3 | 3,9 | 5,1 | 0,5 | 0,8 |
| Visk. (mPas) | 180 | 1.500 | 300 | 5.000 | 750 | 600 |

| | | | | | | |
|---|---|---|---|---|---|---|
| ¹⁾ Metallkomplexfarbstoff | | | | | | |
| ²⁾ DMEA: Dimethylethanolamin | | | | | | |
| ³⁾ Restgehalt an iso-Butanol in der Dispersion | | | | | | |
| ⁴⁾ FS: Farbstoff | | | | | | |

### Herstellung der Vergleichsdispersionen

a) Lösungspolymerisate I' und II'
In einem 4-Liter Glasreaktor mit Ankerrührer, Rückflußkühler und Ölheizung wurde die Vorlage vorgelegt und Luft gegen Stickstoff ausgetauscht.
Die Vorlage wurde auf 105°C aufgeheizt. Dann wurden der Zulauf 1 und 56 g von Zulauf 2 in 3 Std. zudosiert. Anschließend wurde der Rest von Zulauf 2 in 30 min zudosiert und danach noch 1 Std. weitergerührt (Zusammensetzung s. Tabelle 3).

**Tabelle 3**

| | I' | II' |
|---|---|---|
| Vorlage: | | |
| Isobutanol | 200 | 200 |
| Zulauf 1 | - | - |

| Zulauf 1: | | |
|---|---|---|
| Methacrylsäure | 120 | 100 |
| MMA | 480 | 490 |
| n-BA | 340 | 350 |
| Styrol | - | - |
| HEMA | 50 | 50 |
| MTMO | 10 | 10 |

| Zulauf 2: | | |
|---|---|---|
| t-BPO | 20 | 20 |
| Isobutanol | 52 | 52 |

| Zulauf 3: | | |
|---|---|---|
| t-BPO | 5 | 5 |
| Isobutanol | 20 | 20 |
| FG (%) | 78,8 | 79,2 |
| K | 28 | 28 |
| SZ | 77 | 65 |

b) Herstellung der Dispersionen
Die Herstellung erfolgte wie oben bei den erfindungsgemäßen Dispersionen beschrieben (s. Tabelle 4).

**Tabelle 4**

| Vergleichsdispersion | V1 | V2 | V3 |
|---|---|---|---|
| Vorlage: | | | |
| Polymer | I' | I' | II' |
| (g) | 200 | 200 | 200 |
| Polymer (fest) (g) | 157 | 157 | 158 |
| Neopen X 58 | 100 | 100 | 150 |
| Verhältnis Polymer:FS | 1,57 | 1,57 | 1,05 |
| Isobutanol (g) | 100 | 100 | 100 |
| DMEA (g) | 7 | - | 8 |
| wäßr. NH₃ (g) | - | 15 | - |
| FG (%) | 44,6 | 34,8 | 51,1 |
| pH | 7,3 | 7,7 | 7,6 |
| i-BuOH (%) | | 3,7 | 4,1 |
| Visk. (mPas) | 600 | pastös | 2.500 |

### Anwendungstechnische Prüfungen:

Aus den erfindungsgemäßen Sekundärdispersionen können wäßrige Schreibtinten nach Rezepten üblicher Technologie hergestellt werden. Es wurden Schreibtinten mit folgender Rezeptur hergestellt:
50 Teile farbstoffhaltige Sekundärdispersion 1 bis 6 und V1 bis V3
35 Teile Wasser
14 Teile Diglycol als Diethylenglykol
1 Teil Polyethylenglycol als Hilfsmittel

Die Tinten wurden in einen Faserschreiber gefüllt. Dann wurde mit Hilfe eines X-Y-Schreibers Probegraphiken auf ein Blatt Papier aufgetragen. An diesen wurde die Wasserechtheit (durch Wassereinwirkung) und die Lichtechtheit (Xenotest) geprüft. Dabei erwiesen sich die untersuchten Tinten als absolut wasserfest. Die Lichtechtheit lag ebenfalls auf sehr gutem Niveau.

Die mit den erfindungsgemäßen Dispersionen hergestellten Graphiken zeigten einen hohen Glanz.

Die mit den Vergleichsdispersionen hergestellten Graphiken waren matt. Die Ursache hierfür liegt darin, daß die dispergierten Polymerteilchen den Farbstoff nicht in ausreichender Menge aufgenommen haben.

## Patentansprüche

1. Farbstoffe enthaltende wäßrige Dispersionen erhältlich durch
a) Herstellung mindestens zweier Copolymerisate A) und B) in einem organischen Lösungsmittel durch Lösungspolymerisation,
wobei A) 5 bis 50 Gew.-%, bezogen auf A), einer ethylenisch ungesättigten Säure enthält und
B) im wesentlichen frei von ethylenisch ungesättigten Säuren ist
und die Lösungspolymerisation der Copolymerisate A) oder B) in Gegenwart des jeweiligen anderen, bereits hergestellten Copolymerisats A) oder B) erfolgt,
b) Zugabe eines Farbstoffs, der in dem organischen Lösemittel vollständig löslich ist, vor, während oder nach der Lösungspolymerisation.
c) Dispergierung der erhaltenen Lösung in Wasser und
d) gegebenenfalls Entfernung des organischen Lösungsmittels.

2. Wäßrige Dispersionen gemäß Anspruch 1, wobei die Gewichtsanteile des Copolymerisats A) 95 bis 20 Gew.-% und die des Copolymerisats B) 5 bis 80 Gew.-%, bezogen auf die Summe A) + B) betragen.

3. Wäßrige Dispersionen gemäß Anspruch 1 oder 2, wobei der Gehalt der Säuren in Copolymerisat A) so gewählt wird, daß Copolymerisat A) eine Säurezahl von 5 bis 300 aufweist.

4. Verfahren zur Herstellung von wäßrigen Dispersionen gemäß Anspruch 1, gekennzeichnet durch die Verfahrensschritte a) bis d).

5. Verwendung von wäßrigen Dispersionen gemäß einem der Ansprüche 1 bis 4 als Beschichtungsmittel.

6. Mit wäßrigen Dispersionen gemäß einem der Ansprüche 1 bis 4 beschichtete Substrate.

7. Verwendung von wäßrigen Dispersionen gemäß einem der Ansprüche 1 bis 4 als Schreibflüssigkeiten.

8. Schreibflüssigkeiten, enthaltend wäßrige Dispersionen gemäß einem der Ansprüche 1 bis 4.

## Claims

1. A dyestuff-containing aqueous dispersion obtainable by
a) preparation of at least two copolymers A) and B) in an organic solvent by solution polymerization,
A) containing from 5 to 50 % by weight, based on A), of an ethylenically unsaturated acid and
B) being essentially free of ethylenically unsaturated acids
and the solution polymerization of the copolymers A) or B) being carried out in the presence of the other respective copolymer A) or B) already prepared,
b) addition of a dyestuff, which is completely soluble in the organic solvent, before, during or after the solution polymerization,
c) dispersion of the resulting solution in water and
d) removal of the organic solvent if desired.

2. An aqueous dispersion as claimed in claim 1, the proportions by weight of the copolymer A) being from 95 to 20 % by weight and those of the copolymer B) being from 5 to 80 % by weight, based on the sum A) + B).

3. An aqueous dispersion as claimed in claim 1 or 2, the content of the acids in copolymer A) being selected such that copolymer A) has an acid number of from 5 to 300.

4. A process for preparing aqueous dispersions as claimed in claim 1, comprising the process steps a) to d).

5. The use of aqueous dispersions as claimed in one of claims 1 to 4 as coating compositions.

6. A substrate coated with an aqueous dispersion as claimed in one of claims 1 to 4.

7. The use of aqueous dispersions as claimed in one of claims 1 to 4 as recording fluids.

8. A recording fluid containing an aqueous dispersion as claimed in one of claims 1 to 4.

## Revendications

1. Dispersions aqueuses contenant des colorants, obtenues par
a) la préparation d'au moins deux copolymères A) et B) dans un solvant organique par polymérisation en solution,
où A) contient 5 à 50% en poids, par rapport à A), d'un acide à insaturation éthylénique et
B) est quasiment dépourvu d'acides à insaturation éthylénique et la polymérisation en solution de chaque polymère A) ou B) est effectuée en présence de l'autre copolymère A) ou B) préalablement préparé,
b) l'addition d'un colorant entièrement soluble dans le milieu réactionnel, avant, pendant ou après la polymérisation en solution,
c) la dispersion de la solution obtenue dans l'eau et
d) l'éventuelle élimination du solvant organique.

2. Dispersions aqueuses selon la revendication 1, pour lesquelles la proportion en poids du copolymère A) s'élève à 95-20% en poids et celle du copolymère B) à 5-80% en poids, par rapport à la somme A) + B).

3. Dispersions aqueuses selon la revendication 1 ou 2, pour lesquelles la teneur en acide du copolymère A) est choisie de sorte que le copolymère A) présente un indice d'acide de 5 à 300.

4. Procédé de préparation de dispersions aqueuses selon la revendication 1, caractérisé par les étapes a) à d).

5. Utilisation des dispersions aqueuses selon l'une quelconque des revendications 1 à 4 en tant qu'agent d'enduction.

6. Substrats enduits de dispersions aqueuses selon l'une quelconque des revendications 1 à 4.

7. Utilisation de dispersions aqueuses selon l'une quelconque des revendications 1 à 4 en tant que liquides pour l'écriture.

8. Liquides pour l'écriture contenant des dispersions aqueuses selon l'une quelconque des revendications 1 à 4.
